# EUROPEAN PATENT APPLICATION

(11) **EP 4 467 790 A1**
(43) Date of publication of application: **27.11.2024**
(21) Application number: 24177757.2
(22) Date of filing: 23.05.2024
(51) Int. Cl.: F02C 3/22, F01D 25/32, F02C 3/30, F02C 7/16

(54) **CONDENSER FOR STEAM-INJECTED ENGINE**

(30) Priority: 24.05.2023 US 202318322685
(71) Applicant: RTX Corporation, Farmington, CT 06032 (US)
(72) Inventor: ALAHYARI, Abbas A., Farmington, 06032 (US)
(74) Representative: Dehns

(57) **Abstract**

A turbine engine assembly includes a compressor section (26), a combustor section (28), a turbine section (30), a condenser system (34) that includes a water tank (36) that is configured for extracting water from the exhaust gas flow (44) by communicating the exhaust gas flow (44) directly through a volume of water (48) within the water tank (36), and an evaporator system (32), that is at least partially exposed to the exhaust gas flow (44), where thermal energy from the exhaust gas flow (44) is utilized to generate a steam flow (52) from at least a portion of water that is extracted by the condenser system (34) for injection into a core flow path (C).

## Description

### TECHNICAL FIELD

The present invention relates generally to an aircraft propulsion system that includes a steam generation system transforming recovered water into a steam flow for injection into a core flow.

### BACKGROUND

Reduction and/or elimination of carbon emissions generated by aircraft operation is a stated goal of aircraft manufacturers and airline operators. Turbine engines compress incoming core airflow, mix the compressed airflow with fuel that is ignited in a combustor to generate an exhaust gas flow. Steam injection can provide improved propulsive efficiencies by increasing mass flow without additional work by the compressor section. Water recovered from the exhaust gas flow may be transformed into steam using thermal energy from the exhaust gas flow. Water recovery and steam generation utilize heat exchangers to condense and vaporize water into steam that are exposed to the high temperatures and pressures of the exhaust gas flow. The high temperature and pressures present challenges to the configuration and operational life of condenser and evaporator heat exchangers.

### SUMMARY

A turbine engine assembly according to an aspect of this invention includes, among other possible things, a compressor section where an inlet airflow is compressed, a combustor section where the compressed inlet airflow is mixed with fuel and ignited to generate an exhaust gas flow, a turbine section through which the exhaust gas flow is expanded to generate a mechanical power output, a condenser system that includes a water tank that is configured for extracting water from the exhaust gas flow by communicating the exhaust gas flow directly through a volume of water within the water tank, and an evaporator system that is at least partially exposed to the exhaust gas flow where thermal energy from the exhaust gas flow is utilized to generate a steam flow from at least a portion of water that is extracted by the condenser system for injection into a core flow path.

Optionally, and in accordance with the above, the water tank includes an inlet for communicating the exhaust gas flow directly into the volume of water and an outlet for exhausting the exhaust gas flow.

Optionally, and in accordance with any of the above, the turbine engine assembly includes a separator at the outlet for collecting any remaining water from the exhaust gas flow.

Optionally, and in accordance with any of the above, the turbine engine assembly includes an exhaust gas distribution system within the water tank where the exhaust gas flow entering the water tank is spread out into the volume of water.

Optionally, and in accordance with any of the above, the turbine engine assembly includes a circulation system for cooling the volume of water in the water tank. The circulation system includes a heat exchanger where a flow of water from the water tank is placed in thermal communication with a cooling flow.

Optionally, and in accordance with any of the above, the water tank includes baffles for controlling movement of the volume of water within the water tank.

Optionally, and in accordance with any of the above, the water tank includes an annularly shaped portion where the exhaust gas flow and a water flow generate a rotational flow for condensing and separating water from the exhaust gas flow.

Optionally, and in accordance with any of the above, the turbine engine assembly includes at least one liquid collector that is disposed on a radially outer surface of the annular shaped portion of the water tank for collecting liquid from the exhaust as flow.

Optionally, and in accordance with any of the above, the annularly shaped portion includes a gas permeable membrane and a portion of the exhaust gas flow is communicated through the gas permeable membrane and out through a gas outlet.

Optionally, and in accordance with any of the above, the turbine engine assembly includes a nacelle that surrounds the compressor section, combustor section and turbine section and at least a portion of the water tank is disposed in a bottom portion of the nacelle.

A steam generation system for an aircraft propulsion system according to another aspect of this invention includes, among other possible things, a condenser system that includes a water tank where water is extracted from an exhaust gas flow by communication directly through a volume of water within the water tank, and an evaporator system where thermal energy (for example, from the exhaust gas flow) is utilized to generate a steam flow from at least a portion of water that is extracted by the condenser system.

Optionally, and in accordance with any of the above, the water tank includes an inlet for communicating the exhaust gas flow directly into the volume of water and an outlet for exhausting the exhaust gas flow. The outlet for exhausting the exhaust gas flow is in communication with a non-water filled ullage of the water tank.

Optionally, and in accordance with any of the above, the steam generation system includes a distribution system within the water tank where the exhaust gas flow entering the water tank is spread out within the volume of water.

Optionally, and in accordance with any of the above, the steam generation system includes a circulation system for cooling the volume of water in water tank. The circulation system includes a heat exchanger where a flow of water from the water tank is placed in thermal communication with a cooling flow.

Optionally, and in accordance with any of the above, the water tank includes internal baffles for controlling movement of the volume of water within the water tank.

Optionally, and in accordance with any of the above, the water tank includes an annularly shaped portion where at least a portion of the exhaust gas flow and a water flow are introduced tangentially to generate a rotational flow where water from the exhaust gas flow is condensed and separated from the exhaust gas flow.

Optionally, and in accordance with any of the above, the annularly shaped portion includes a gas permeable membrane and the exhaust gas flow is communicated through the gas permeable membrane to separate water from the exhaust gas flow.

A method of generating a steam flow for a turbine engine, the method, according to another aspect of this invention includes, among other possible things, introducing a water containing exhaust gas flow into a volume of water that is contained in a water tank, cooling the exhaust gas flow to condense water with the volume of water, extracting water from the exhaust gas flow into the volume of water, and heating a portion of the water that is extracted from the exhaust gas flow to generate a steam flow.

Optionally, and in accordance with any of the above, the water containing exhaust gas flow is introduced tangentially into an annularly shaped portion of the water tank to induce a rotational flow and the method further includes separating the liquid water from the gas flow utilizing the rotational flow within the annularly shaped portion of the water tank.

Optionally, and in accordance with any of the above, the method further includes separating liquid water from the gas flow through a gas permeable membrane.

Although the different examples have the specific components shown in the illustrations, embodiments of this invention are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is a schematic view of an example aircraft propulsion system embodiment.
Figure 2 is a schematic view of portion of a water tank of an example condenser system embodiment.
Figure 3 is a schematic view of another example aircraft propulsion system embodiment.
Figure 4 is a schematic view of another example condenser system embodiment.
Figure 5 is a schematic view of another example condenser system embodiment.
Figure 6 is a schematic view of a gas permeable membrane of the example condenser system of Figure 5.

### DETAILED DESCRIPTION

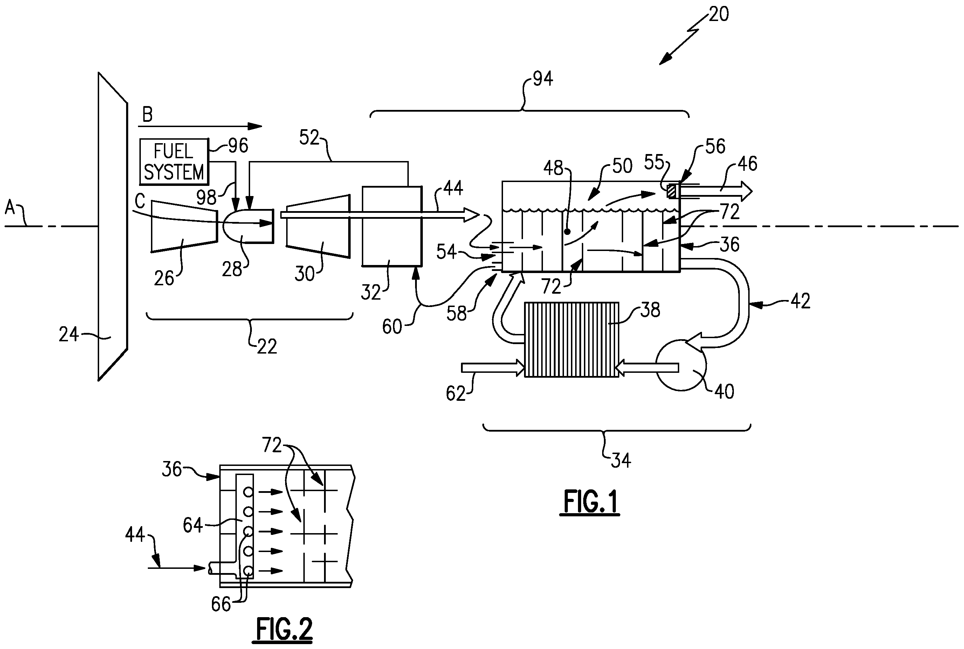

Figure 1 schematically illustrates an example propulsion system 20 that includes a condenser system 34 including a water tank 36 where at least a portion of a water containing exhaust gas flow is communicated directly into a volume of water for condensing and extracting water for use in generating a steam flow for injection it a core flow path C.

The example propulsion system 20 includes a fan section 24 and a core engine 22. The core engine 22 includes a compressor section 26, a combustor section 28 and the turbine section 30 disposed along an engine longitudinal axis A. The fan section 24 drives inlet airflow along a bypass flow path B, while the compressor section 26 draws inlet air along the core flow path C. The inlet airflow is compressed and communicated to the combustor section 28 where the compressed core airflow is mixed with a fuel flow 98 from a fuel system 96 and ignited to generate an exhaust gas flow 44. The exhaust gas flow 44 expands through the turbine section 30 where energy is extracted and utilized to drive the fan section 24 and the compressor section 26.

Although an example engine architecture is disclosed by way of example, other turbine engine architectures are within the contemplation and scope of this disclosure. Moreover, although the disclosed non-limiting embodiment depicts a turbofan turbine engine, it should be understood that the concepts described herein are not limited to use with turbofans as the teachings may be applied to other types of turbine engines. Additionally, the features of this disclosure may be applied to other engine configurations utilized to generate shaft power.

The example fuel system 96 is configured to provide a hydrogen-based fuel such as a liquid hydrogen (LH₂) to the combustor 28. Although hydrogen is disclosed by way of example, other non-carbon-based fuels, biofuels and/or other sustainable aviation fuels could be utilized and are within the contemplation of this disclosure. Moreover, the disclosed features may also be beneficial in an engine configured to operate with traditional carbon-based fuels.

A steam generation system 94 includes an evaporator 32 and a condenser system 34 that are disposed downstream of the turbine section 30 and receive the exhaust gas flow 44. The evaporator system 32 utilizes thermal energy from the exhaust gas flow 44 to generate a steam flow 52 from a water flow 60 extracted by the condenser system 34 The condenser system 34 cools the exhaust gas flow 44 to extract water that is gathered in a tank 36 containing a volume of water 48.

The example condenser system 34 uses the volume of water 48 contained within the tank 36 to both cool and separate water from the exhaust gas flow 44. The exhaust gas flow 44 is introduced into the water tank 36 and into direct contact with the volume of water 48. The volume of water 48 cools the exhaust gas flow 44 such that water is condensed and remains within the volume of water 48 within the tank 36. Any remaining gas of the exhaust gas flow 44 bubbles up through the volume of water 48 through an empty ullage 50 of the tank 36 and out through an outlet 56.

A separator 55 is disposed at the outlet 56 and accumulates any remaining liquid within the exhaust gas flow. The separator 55 may be a baffle, screen, grid or any other structure where liquid can coalesce and fall back into the tank 36. Any remaining exhaust gas flow has a reduced moisture content and is referenced as a dry exhaust gas flow 46 that is exhausted from the tank 36 and into the ambient environment.

A temperature of the volume of water 48 is maintained by a cooling circulation system 42 that includes a pump 40 and a heat exchanger 38. A cooling flow 62 is communicated through the heat exchanger 38 to cool the water. A portion of the volume of water 48 within the tank 36 is pumped through the heat exchanger 38 and cooled. The cooling flow 62, in one example embodiment, is a portion of the inlet airflow through the fan 24. In another example embodiment, the cooling flow 62 may be a fuel flow. Although air and fuel are disclosed by way of example as potential cooling flows, other flows such as refrigerant flow or lubricant could be utilized for removing heat from the volume of water and are within the contemplation and scope of this disclosure.

The example tank 36 includes baffles 72 arranged to reduce any sloshing or internal movement of the volume of water 48 during aircraft operation and maneuvering. The baffles 72 are static structures that extend transverse to both water and exhaust gas flow directions to reduce sloshing of the volume of water 48.

Referring to Figure 2 with continued reference to Figure 1, a distributor 64 may be provided within the water tank 36 to distribute inlet exhaust gas flow 44 throughout the water tank 36. The example distributor 64 includes a plurality of openings 66 that inject the exhaust gas flow 44 throughout the volume of water 48. The distributor 64 may be arranged to communicate exhaust gas flow 44 at different locations within the tank 36. Moreover, although a single distributor 64 is shown schematically, several distributors 64 could be arranged throughout the water tank 36 to provide sufficient flow area as needed to condense water and enable sufficient flow through of the exhaust gas flow 44.

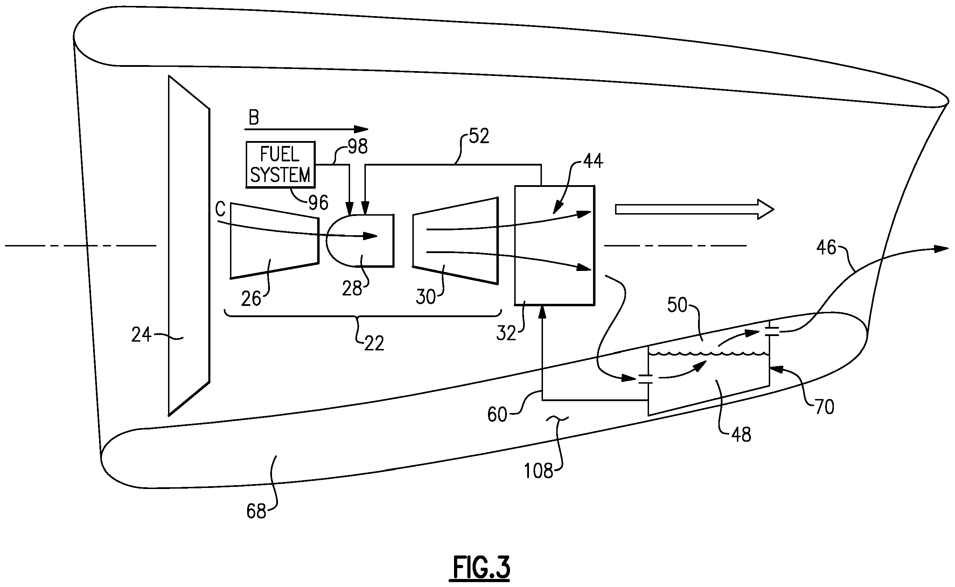

Referring to Figure 3 with continued reference to Figure 1, another example water tank 70 is shown schematically and is located within a bottom portion of a nacelle 68. The nacelle 68 includes an interior space 108. The water tank 70 may be supported at least partially within the interior space 108. A portion of the exhaust gas flow 44 may be communicated through the volume of water 48 contained within the tank 70. The water tank 70 is shown in Figure 3 as disposed within the nacelle 68 and operates as described above with regard to the example shown and described in Figure 1. Although the example water tank 70 is shown and described as being supported in the nacelle 68, it is within the contemplation of this disclosure that the water tank 70 may be supported and located in other locations within the aircraft airframe and/or engine assembly 20.

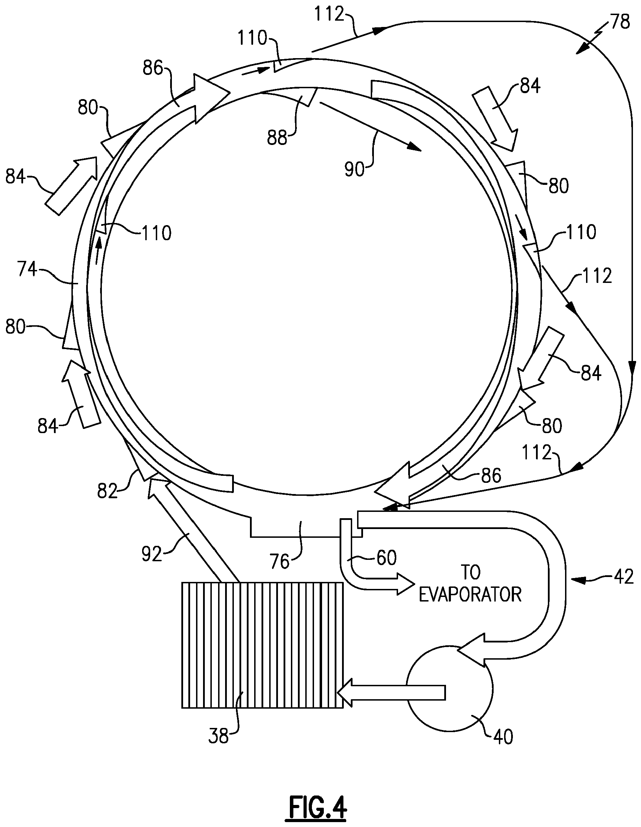

Referring to Figure 4, another condenser system 78 is schematically shown and includes a water tank 76 and an annular portion 74. Inlet exhaust gas flows 84 are communicated tangentially into the annular portion 74 through inlets 80 to generate a rotational flow schematically indicated at 86. In one example embodiment, several inlets 80 are arranged about the annular portion 76 to induce rotational flow.

The rotational flow 86 drives the heavier liquid water radially outward and into the water tank 76. The circulation system 42 pumps a portion of flow from the water tank 76 through the heat exchanger 38 and then through a water inlet 82. The water inlet 82 is arranged to introduce water inlet flow 92 tangentially into the annular portion 74. The cooled water inlet flow 92 mixes with the tangential exhaust gas flow 84 to generate rotation. Liquid water condensed out of the exhaust gas flow 84 is combined with the cooled water inlet flow 92 and communicated into the water tank 76. Additionally, at least one water collector 110 is disposed on a radially outer wall for further collecting liquid and water for the exhaust gas flow. The liquid collectors 110 may be scoops as shown, grooves or porous regions to further separate liquid from the gas flow 84. Water flow 112 that is exhausted from the liquid collectors 110 is communicated back to the tank 76 as is schematically shown.

The remaining dry gas flow 90 is exhausted through a radially inner gas outlet 88 and then into the ambient environment. The rotational flow about the annular portion 74 provides for both condensing of liquid and separation of water from the remaining gas portion that is exhausted as the dry gas flow 90.

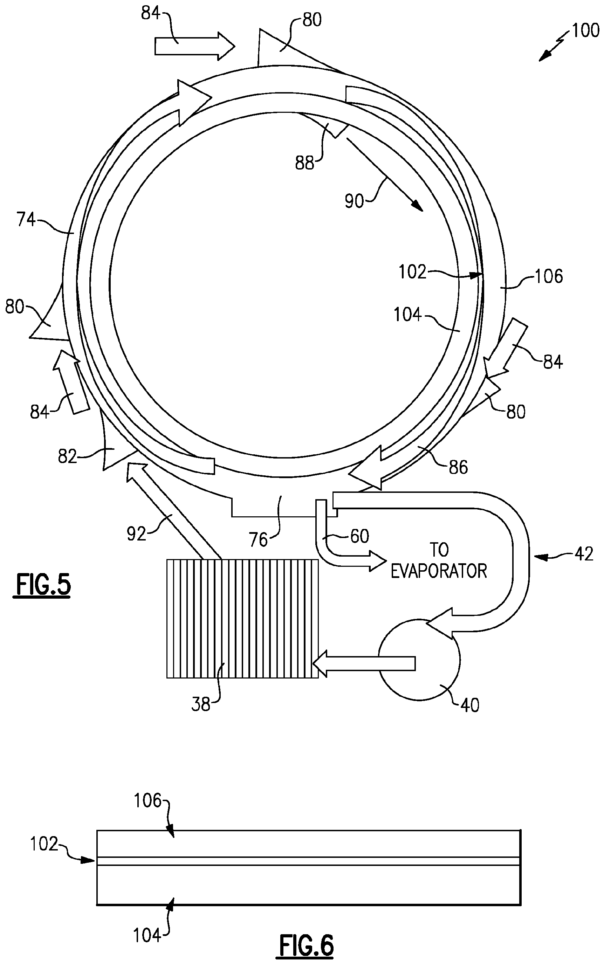

Referring to Figures 5 and 6, another example condenser system is schematically shown and generally indicated at 100. The condenser system 100 includes the inlets 80 for introducing the exhaust gas flows 84 tangentially into the annular portion 74. A gas permeable membrane 102 is provided within the annular portion 74 and provides for separation of any gas flow from condensed liquid. In the disclosed example embodiment, the exhaust gas flow 84 is introduced through the inlets 80 and mixed with a cooled inlet water flow 92. The cooled inlet water flow 92 cools the exhaust gas flow 84 such that liquid water is condensed.

The gas permeable membrane 102 provides for gas to pass through to a radially interior side of the annular portion 74. Accordingly, on a radially outer side of the permeable membrane is a mixture of water vapor, condensed water and gas flow as indicated at 106. The radially inner side of the permeable membrane 102 is substantially all a gas flow as indicated at 104. The gas component passes through the permeable membrane 102 and eventually out as the dry gas flow 90 through the outlet 88.

The permeable membrane 102 may be formed utilizing any material determined to provide the desired separation of gas and water from the rotational mixed flow of water and gas in the annular portion 74. Moreover, the structure of the permeable membrane 102 may include layers of support and permeable material that prevent liquid flow and enable gas flow.

The annular portion 74 of the example condenser systems 78 and 100 shown schematically in Figures 4 and 5 may be arranged about the longitudinal axis A with appropriate ducting provided for communicating the gas flows 84 into the annular portion 74. Moreover, the annular portion 74 may be arranged and mounted within an engine nacelle 68 or other engine structures and remain within the scope and contemplation of this disclosure.

Accordingly, the disclosed example condenser systems provide for the extraction and separation of liquid from an exhaust gas flow directly through a volume of water to combine water storage, gas cooling and separation into one robust system.

Although an example embodiment has been disclosed, a worker of ordinary skill in this art would recognize that certain modifications would come within the scope of this disclosure. For that reason, the following claims should be studied to determine the scope and content of this disclosure.

## Claims

1. A turbine engine assembly comprising:
a compressor section (26) configured to compress an inlet airflow;
a combustor section (28) configured to mix the compressed inlet airflow with fuel and ignite the mixture to generate an exhaust gas flow (44;84);
a turbine section (30) configured to expand the exhaust gas flow (44;84) to generate a mechanical power output;
a condenser system (34;78;100) including a water tank (36;70;76) configured to extract water from the exhaust gas flow (44;84) by communicating the exhaust gas flow (44;84) directly through a volume of water (48) within the water tank (36;70;76); and
an evaporator system (32) at least partially exposed to the exhaust gas flow (44;84) and configured to utilize thermal energy from the exhaust gas flow (44;84) to generate a steam flow (52) from at least a portion of water extracted by the condenser system (34;78;100) for injection into a core flow path (C).

2. The turbine engine assembly as recited in claim 1, wherein the water tank (36;70;76) includes an inlet (80) for communicating the exhaust gas flow (44;84) directly into the volume of water (48) and an outlet (56;88) for exhausting the exhaust gas flow (44;84).

3. The turbine engine assembly as recited in claim 2, including a separator (55) at the outlet (56) for collecting any remaining water from the exhaust gas flow (44;84).

4. The turbine engine assembly as recited in claim 2 or 3, including an exhaust gas distribution system (64) within the water tank (36) and configured to spread out the exhaust gas flow (44;84) entering the water tank (36) into the volume of water (48).

5. The turbine engine assembly as recited in any preceding claim, wherein the water tank (76) includes an annularly shaped portion (74) configured such that the exhaust gas flow (84) and a water flow (92) generate a rotational flow (86) for condensing and separating water from the exhaust gas flow (84).

6. The turbine engine assembly as recited in claim 5, including at least one liquid collector (110) disposed on a radially outer surface of the annular shaped portion (74) of the water tank (76) for collecting liquid from the exhaust as flow (44;84).

7. The turbine engine assembly as recited in claim 5 or 6, wherein the annularly shaped portion (74) includes a gas permeable membrane (102) and a portion of the exhaust gas flow (84) is communicated through the gas permeable membrane (102) and out through a gas outlet (88).

8. The turbine engine assembly as recited in any preceding claim, including a nacelle (68) surrounding the compressor section (26), combustor section (28) and turbine section (30), wherein at least a portion of the water tank (70) is disposed in a bottom portion of the nacelle (68).

9. A steam generation system (94) for an aircraft propulsion system, the steam generation system (94) comprising:
a condenser system (34;78;100) including a water tank (36;70;76) configured to extract water from an exhaust gas flow (44;84) by communicating the exhaust gas flow (44;84) directly through a volume of water (48) within the water tank (36; and
an evaporator system (32) configured to utilize thermal energy to generate a steam flow (52) from at least a portion of water extracted by the condenser system (34;78;100).

10. The steam generation system (94) as recited in claim 9, wherein the water tank (36;70;76) includes an inlet (80) for communicating the exhaust gas flow (44;84) directly into the volume of water (48) and an outlet (56;88) for exhausting the exhaust gas flow (44;84), and the outlet (56;88) is in communication with a non-water filled ullage (50) of the water tank (36;70;76), optionally wherein:
the steam generation system includes a distribution system (64) within the water tank (36) and the distribution system (64) is configured to spread out the exhaust gas flow (44;84) entering the water tank (36) within the volume of water (48).

11. The turbine engine assembly or steam generation system (94) as recited in any preceding claim, including a circulation system (42) for cooling the volume (48) of water in the water tank (36;70;76), the circulation system (42) including a heat exchanger (38) configured to place a flow of water from the water tank (36;70;76)in thermal contact with a cooling flow (62).

12. The turbine engine assembly or steam generation system (94) as recited in any preceding claim, wherein the water tank (36) includes internal baffles (72) for controlling movement of the volume of water (48) within the water tank (36).

13. The steam generation system (94) as recited in any of claims 9 to 12, wherein the water tank (76) includes an annularly shaped portion (74) configured such that at least a portion of the exhaust gas flow (84) and a water flow (92) are introduced tangentially to generate a rotational flow (86) for condensing and separating water from the exhaust gas flow (84) from the exhaust gas flow (44;84), optionally wherein:
the annularly shaped portion (74) includes a gas permeable membrane (102) and the exhaust gas flow (84) is communicated through the gas permeable membrane (102) to separate water from the exhaust gas flow (84).

14. A method of generating a steam flow (52) for a turbine engine, the method comprising:
introducing a water containing exhaust gas flow (44; 84) into a volume of water (48) contained in a water tank (36;70;76);
cooling the exhaust gas flow (44;84) to condense water from the exhaust gas flow using the volume of water (48);
extracting water from the exhaust gas flow (44;84) into the volume of water (48); and
heating a portion of the water extracted from the exhaust gas flow (44;84) to generate a steam flow (52).

15. The method as recited in claim 14, wherein:
the water containing exhaust gas flow (84) is introduced tangentially into an annularly shaped portion (74) of the water tank (76) to induce a rotational flow (86); and
the method further includes separating the liquid water from the exhaust gas flow (84) utilizing the rotational flow (86) within the annularly shaped portion (74) of the water tank (76), optionally wherein:
the method further comprises separating the liquid water from the exhaust gas flow (84) through a gas permeable membrane (102).
